# EUROPEAN PATENT APPLICATION

(11) **EP 4 742 372 A1**
(43) Date of publication of application: **13.05.2026**
(21) Application number: 25214290.6
(22) Date of filing: 07.11.2025
(51) Int. Cl.: H01M 10/613, H01M 10/6561, H01M 50/213, H01M 50/262, H01M 50/291

(54) **BATTERY CELL TRAY AND METHOD FOR MANUFACTURING THE SAME**

(30) Priority: 12.11.2024 KR 20240160592
(71) Applicant: SAMSUNG SDI CO., LTD., Yongin-si, Gyeonggi-do 17084 (KR); DREAMCHEM TECHNOLOGY Co., Ltd., Cheongju-si, Chungcheongbuk-do 28174 (KR)
(72) Inventor: Jeong, Yonghyeon, 17084 Yongin-si (KR); Kim, Heeyeon, 17084 Yongin-si (KR); Ha, Changwoo, 17084 Yongin-si (KR); Choi, Younghyun, 17084 Yongin-si (KR); Ahn, Young Jin, 28174 Cheongju-si (KR); Jang, In Ho, 28174 Cheongju-si (KR)
(74) Representative: Marks & Clerk LLP

(57) **Abstract**

A battery cell tray includes: a base tray configured to accommodate a plurality of battery cells thereon; and an inner tray coupled to the base tray and having partition walls between areas where adjacent ones of the plurality of battery cells are to be accommodated.

## Description

### BACKGROUND

### 1. Field

Aspects of embodiments of the present disclosure relate to a battery cell tray and a method for manufacturing the same.

### 2. Description of the Related Art

Different from primary batteries that are not designed to be (re)charged, secondary batteries are designed to be discharged and recharged. Low-capacity secondary batteries are used in small, portable electronic devices, such as smart phones, feature phones, notebook computers, digital cameras, and camcorders, while large-capacity secondary batteries are widely used as power sources for driving motors, such as of hybrid vehicles or electric vehicles, and for power storage. A secondary battery generally includes an electrode assembly including (or consisting of) a positive electrode and a negative electrode, a case that accommodates the electrode assembly, a terminal part connected to the electrode assembly, etc.

After manufacture, lithium secondary batteries are activated by performing a number of charging and discharging cycles, which is called a formation process or an activation process. A charging/discharging device is used for this activation process, which may charge and discharge multiple cells concurrently (or simultaneously) to increase productivity in the mass production process of secondary batteries.

Secondary batteries are manufactured through a number of manufacturing processes, and a tray capable of storing multiple battery cells is used to easily and safely handle them when performing various processes, such as an electrolyte injection process and an activation process, or when transporting the battery cells between the processes. Generally, a battery cell tray has a plurality of battery receptacles, each having a shape corresponding to that of the battery cell or battery pack to be stored, thereby facilitating the mass production of batteries. A conventional battery cell tray has an optimized structure that facilitates the circulation of cooling airflow to reduce heat generation during charging and discharging of the cells while, at the same time, is sufficiently rigid, which conflicts with the need for sufficient airflow.

The above information disclosed in this Background section is for enhancement of understanding of the background of the present disclosure, and therefore, it may contain information that does not constitute related (or prior) art.

### SUMMARY

Embodiments of the present disclosure provide a battery cell tray with a separate structure including a base tray and an inner tray and a method for manufacturing the same.

However, aspects and features of the present disclosure are not limited to those described above, and other aspects and features of the present disclosure will be clearly understood by those skilled in the art from the description of the present disclosure below.

According to an embodiment of the present disclosure, a battery cell tray includes: a base tray configured to accommodate (or seat) a plurality of battery cells thereon; and an inner tray coupled to the base tray and having (or being configured to form) partition walls between (areas where adjacent ones of) the plurality of battery cells (are to be accommodated).

The inner tray may include: a support coupled to the base tray on a side of a space for accommodating (or seating) each individual battery cell therein defined by the partition walls while supporting the battery cell(s); and a first ventilation groove (formed) adjacent to the support.

The base tray may have a plurality of holes (formed) beneath (areas at where) the plurality of battery cells (are to be) seated on the base tray.

The plurality of holes may include: a seating hole extending (or for seating each individual battery cell) therethrough in a center of a bottom of a space at where (or for seating the) each individual battery cell is to be accommodated (or therein) defined by the partition walls; and a first ventilation hole defining (or configured to define) a space for ventilation at a corner of the bottom of the space at where (or for seating the) each individual battery cell is to be seated (or therein) defined by the partition walls.

The base tray may have a first bolting part including (or comprising) a first bolt hole and is (at where the inner tray is) bolted to the base (or inner) tray (therethrough) at a portion beneath the plurality of battery cells seated on the base tray; and the inner tray may have a second bolting part including (or comprising) a second bolt hole and is (at where the inner tray is) bolted to the first bolting part of the base tray (therethrough).

The first bolting part may have a centering projection (formed) to center the base tray and the inner tray; and the second bolting part may have a centering groove coupled to the centering projection.

The first bolting part may have a plurality of second ventilation holes (formed) around the first bolt hole; and the second bolting part may have a plurality of third ventilation holes (formed) around the second bolt hole.

The base tray may have a fixture formed to fix the inner tray to a contact part with the inner tray on the outside of the base tray.

The base tray may have a cross-shaped reinforcing wall (formed) in its center to support the load of the plurality of battery cells.

The reinforcing wall may have a second ventilation groove in (or formed on) a portion of its upper portion for ventilation.

According to an embodiment of the present disclosure, a method of manufacturing battery cell trays includes: manufacturing a base tray configured to accommodate (or seat) a plurality of battery cells thereon; manufacturing an inner tray configured to form partition walls between (areas at where) the plurality of battery cells (are to be accommodated); and coupling the base tray and the inner tray (together).

The manufacturing of the inner tray may include: forming a support coupled to the base tray on a side of a space for accommodating (or seating) each individual battery cell therein defined by the partition walls while supporting the battery cell(s); and forming a first ventilation groove adjacent to the support.

The manufacturing of the base tray may include forming a plurality of holes beneath (areas at where) the plurality of battery cells (are to be) seated on the base tray.

In the forming of the plurality of holes, the plurality of holes may include: a seating hole (for seating each individual battery cell therethrough) in a center of a bottom of a space at where (or for seating the) each individual battery cell (is seated) therein defined by the partition walls; and a first ventilation hole configured to define a space for ventilation at a corner of the bottom of the space for seating (the) each individual battery cell therein defined by the partition walls.

The manufacturing of the base tray may include forming a first bolting part including (or comprising) a first bolt hole (at where the inner tray) is bolted to the base (or inner) tray (therethrough) at a portion beneath areas at where (or the) plurality of battery cells (are to be) seated on the base tray; and the manufacturing of the inner tray including forming a second bolting part comprising a second bolt hole to be (or and is) bolted to the first bolting part of the base tray (therethrough).

The forming of the first bolting part may include forming a centering projection to center the base tray and the inner tray; and the forming of the second bolting part may include forming a centering groove coupled to the centering projection.

The forming of the first bolting part may include forming a plurality of second ventilation holes around the first bolt hole; and the forming of the second bolting part may include forming a plurality of third ventilation holes around the second bolt hole.

The manufacturing of the base tray may include forming a fixture to fix the inner tray to a contact part with the inner tray on the outside of the base tray.

The manufacturing of the base tray may include forming a cross-shaped reinforcing wall in a center of the base tray to support the load of the plurality of battery cells.

The forming of the cross-shaped reinforcing wall may include forming a second ventilation groove on a portion of an upper portion of the reinforcing wall for ventilation.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following accompanying drawings illustrate embodiments of the present disclosure and further describe aspects and features of the present disclosure together with the detailed description of the present disclosure. Thus, the present disclosure should not be construed as being limited to the drawings, in which:
FIG. 1A is a top perspective view of a cylindrical secondary battery;
FIG. 1B is a cross-sectional view of the cylindrical secondary battery shown in FIG. 1A;
FIG. 2A is a perspective view of a conventional battery cell tray;
FIG. 2B is a top view of the conventional battery cell tray shown in FIG. 2A;
FIG. 3 is an exploded view of a battery cell tray according to an embodiment of the present disclosure;
FIG. 4 is an enlarged view of a portion of the conventional battery cell tray shown in FIGS. 2A and 2B;
FIG. 5A is a partial perspective view of a base tray and an inner tray coupled together in a battery cell tray according to an embodiment of the present disclosure;
FIG. 5B is a partial top view of the base tray and the inner tray coupled together in a battery cell tray according to an embodiment of the present disclosure;
FIG. 6 is an enlarged view of a portion of a base tray at where one battery cell is seated in the conventional battery cell tray;
FIG. 7 is an enlarged view of a portion of the base tray at where one battery cell is seated in the battery cell tray according to an embodiment of the present disclosure;
FIG. 8 is a view of a portion where the base tray and the inner tray are bolted together in the battery cell tray according to an embodiment of the present disclosure;
FIG. 9A is a perspective view of a first bolting part of the base tray of the battery cell tray according to an embodiment of the present disclosure;
FIG. 9B is a top view of the first bolting part of the base tray of the battery cell tray according to an embodiment of the present disclosure;
FIG. 10A is a perspective view of a second bolting part of the inner tray of the battery cell tray according to an embodiment of the present disclosure;
FIG. 10B is a top view of the second bolting part of the inner tray of the battery cell tray according to an embodiment of the present disclosure;
FIG. 11 is a view of a fixture and a reinforcing wall of the base tray of the battery cell tray according to an embodiment of the present disclosure; and
FIG. 12 is a flowchart describing a method of manufacturing battery cell trays according to an embodiment of the present disclosure.

### DETAILED DESCRIPTION

Embodiments of the present disclosure will be described below, in detail, with reference to the accompanying drawings. Prior to the description, it is noted that the terms or words used in this specification and claims should not be construed as being limited to their common or dictionary meanings but instead should be understood to have meanings and concepts in agreement with the present disclosure based on the principle that an inventor can define the concept of each term suitably in order to describe his/her own invention in the best way possible. Accordingly, because the embodiments described in this specification and the configurations illustrated in the drawings are only some examples of the present disclosure and do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

To facilitate understanding of the present disclosure, the accompanying drawings may not be drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of about 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of example embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of example embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

Examples of secondary batteries include a coin type, a cylindrical type, a prismatic type, and a pouch type. The present disclosure is generally applicable to a cylindrical secondary battery; however, the present disclosure is not limited to use in connection with the cylindrical secondary battery. Therefore, the cylindrical secondary battery will be first briefly described prior to description of embodiments of the present disclosure.

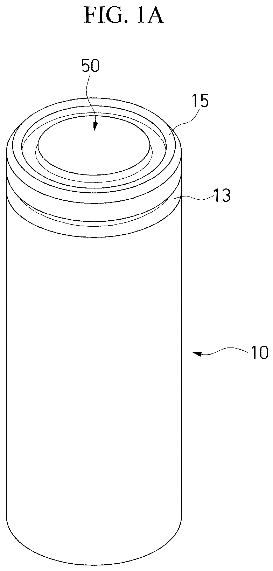

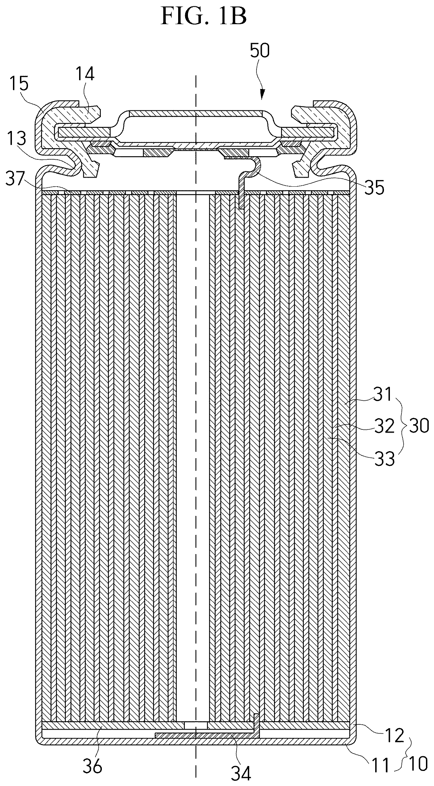

FIG. 1A is an upper perspective view of a cylindrical secondary battery. FIG. 1B is a cross-sectional view of the cylindrical secondary battery shown in FIG. 1A.

Referring to FIGS. 1A and 1B, the cylindrical secondary battery may include an electrode assembly 30, a case 10 that accommodates the electrode assembly 30 and an electrolyte therein, a cap assembly 50 that is connected at an opening in the case 10 and that seals the case 10, and an insulating plate 37 disposed between the electrode assembly 30 and the cap assembly 50 within the case 10.

The electrode assembly 30 may include a separator 32 and a first electrode 33 and the second electrode 31 with the separator 32 interposed between and may be wound in a jelly-roll form.

The first electrode 33 may include a first base (e.g., a first substrate) and a first active material layer disposed on the first base. A first lead tap 35 may extend from a first uncoated part of the first base at where the first active material layer is not disposed to the outside. The first lead tap 35 may be electrically connected to the cap assembly 50.

The second electrode 31 may include a second base (e.g., a second substrate) and a second active material layer disposed on the second base. A second lead tap 34 may extend from a second uncoated part of the second base at where the second active material layer is not disposed to the outside. The second lead tap 34 may be electrically connected to the case 10. The first lead tap 35 and the second lead tap 34 may extend from the electrode assembly 30 in opposite directions.

The first electrode 33 may act as a positive electrode. In such an embodiment, the first base may include (or may be composed of) aluminum foil, for example. The first active material layer may include a transition metal oxide, for example. The second electrode 31 may act as a negative electrode. In such an embodiment, the second base may include (or may be composed of) copper foil or nickel foil, for example. The second active material layer may include graphite, for example.

The separator 32 permits movement of lithium ions while preventing the short-circuit of the first electrode 33 and the second electrode 31. The separator 32 may include (or may be composed of) a polyethylene film, a polypropylene film, or a polyethylene-polypropylene film, for example. The case 10 may accommodate the electrode assembly 30 and an electrolyte and forms an external form of the battery along with the cap assembly 50. The case 10 may have a body part 12 having an approximate cylindrical shape and a bottom part 11 connected to one side of the body part 12. A beading part 13 that has been deformed toward the inside of the body part 12 may be disposed in the body part 12. A crimping part 15 that has been bent toward the inside of the body part 12 may be disposed at an end of the body part 12 on the opening side.

The beading part 13 may suppress movement of the electrode assembly 30 within the case 10 and may facilitate the settlement of a gasket 14 and the cap assembly 50. The crimping part 15 may firmly fix the cap assembly 50 by pressurizing an edge of the cap assembly 50 through the gasket 14. The case 10 may include (or may be made of) iron plated with nickel, for example.

The cap assembly 50 may seal the case 10 by being fixed to the inside of the crimping part 15 through the gasket 14. The cap assembly 50 may include a cap-up part, a safety vent, a cap-down part, an insulating member, and a sub-plate, but the present disclosure is not limited to such examples. The cap assembly 50 may be variously deformed.

The cap-up part may be disposed at the top of the cap assembly 50. The cap-up part may include a terminal part that upward convexly protrudes and that is to be connected to an external circuit. An output for discharging excess gas around the terminal part may be disposed in the cap-up part.

The safety vent may be disposed under the cap-up part. The safety vent may include a protruding part that downward convexly protrudes and that is connected to the sub-plate. At least one notch may be disposed around the protruding part.

When excess gas is generated due to, for example, over-charging or an abnormal operation of the secondary battery, the protruding part may be upwardly deformed by the pressure of the gas and separated from the sub-plate. Furthermore, the safety vent may be cut (e.g., may tear or burst) along the notch. The safety vent can prevent explosion of the secondary battery by discharging the excess gas to the outside.

The cap-down part may be disposed under the safety vent. A first opening for exposing the protruding part of the safety vent and a second opening for discharging gas may be disposed in the cap-down part. The insulating member may be disposed between the safety vent and the cap-down part and may insulate the safety vent and the cap-down part.

The sub-plate may be disposed under the cap-down part. The sub-plate may be fixed to the bottom of the cap-down part to close (e.g., to seal) the first opening in the cap-down part. The protruding part of the safety vent may be fixed to the sub-plate. The first lead tap 35 that has been withdrawn from the electrode assembly 30 may be fixed to the sub-plate. Accordingly, the cap-up part, the safety vent, the cap-down part, and the sub-plate may be electrically connected to the first electrode 33 of the electrode assembly 30.

The insulating plate 37 may be disposed to adjoin the electrode assembly 30 under the beading part 13. A tap opening through which the first lead tap 35 passes may be provided in the insulating plate 37. The cap assembly 50 that is electrically connected to the first electrode 33 by the first lead tap 35 may face the electrode assembly 30 with the insulating plate 37 interposed therebetween. The cap assembly 50 may maintain an insulated state from the electrode assembly 30 by the insulating plate 37. The cylindrical secondary battery may include another insulating plate 36 for insulation between the electrode assembly 30 and the bottom part 11 of the case 10.

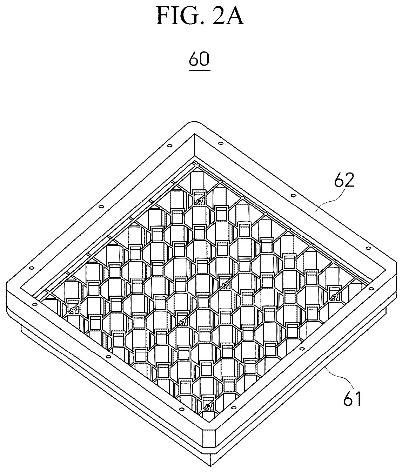

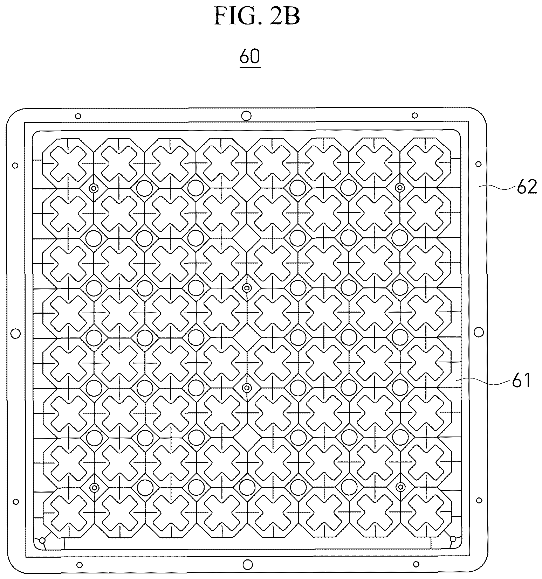

FIG. 2A is a perspective view of a conventional battery cell tray. FIG. 2B is a top view of the conventional battery cell tray shown in FIG. 2A.

Referring to FIGS. 2A and 2B, the conventional battery cell tray 60 is configured integrally with (e.g., integrally includes) a base tray 61 to seat (e.g., to accommodate) a plurality of battery cells thereon and a height compensation block 62 to compensate for the height of the plurality of battery cells. The conventional battery cell tray 60 may be a 64-cell tray with 8 cells in a width direction and 8 cells in a length direction and may have individual spaces configured to seat (e.g., to accommodate) individual battery cells therein, each having an octagonal structure with a pitch of 60 mm x 60 mm.

The conventional battery cell tray 60 may not properly cool the plurality of battery cells because it lacks sufficient space for wind from cooling fan(s) beneath the plurality of battery cells to escape when the plurality of battery cells are seated on the conventional battery cell tray 60. In addition, an increase in temperature of the plurality of battery cells due to heat generation of the battery cells during charging and discharging affects the voltage or current measurement of the battery cells, thereby making accurate measurement difficult and affecting voltage or current measurement values. Moreover, a ventilation structure that allows wind to escape in this way also affects the ability for a fire extinguishing system to provide fire-extinguishing water to flow down smoothly when fire-extinguishing water is sprayed by sprinklers in the event of a fire while battery cell trays are loaded and left unattended. Hence, if ventilation is not smooth, such as in the conventional battery cell tray 60, the ability for fire extinguishing of battery cells may also decrease as a result.

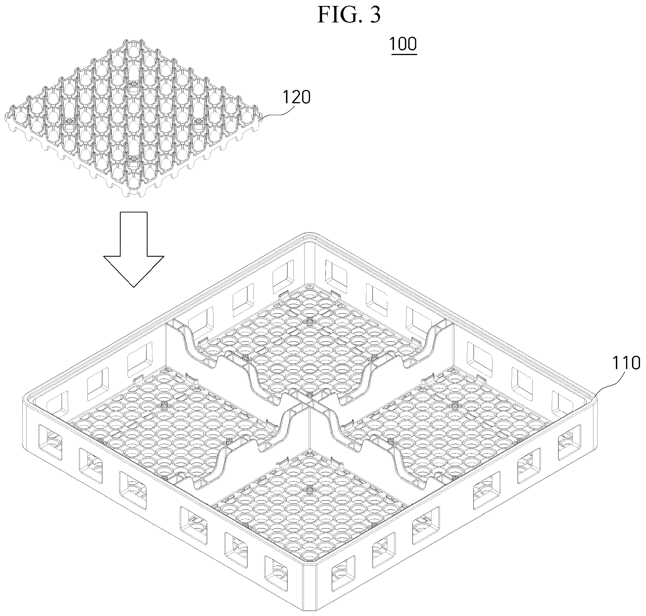

FIG. 3 is an exploded view of a battery cell tray according to an embodiment of the present disclosure.

Referring to FIG. 3, the battery cell tray 100, according to an embodiment of the present disclosure, may include a base tray 110 for seating (e.g., for accommodating) a plurality of battery cells thereon, and an inner tray 120 that is coupled to the base tray 110 and forms partition walls between the plurality of battery cells. The battery cell tray 100, according to an embodiment of the present disclosure, may be a 256-cell tray with four regions of 8 cells in a width direction and 8 cells a in length direction and may have individual spaces configured to seat (e.g., to accommodate) individual battery cells therein, each having a pitch of 60 mm x 60 mm.

The battery cell tray 100, according to an embodiment of the present disclosure, can effectively cool the plurality of battery cells mounted thereon even though the number of battery cells seated thereon is increased compared to the conventional battery cell tray 60 because the battery cell tray 100 has a separate structure of the base tray 110 and the inner tray 120.

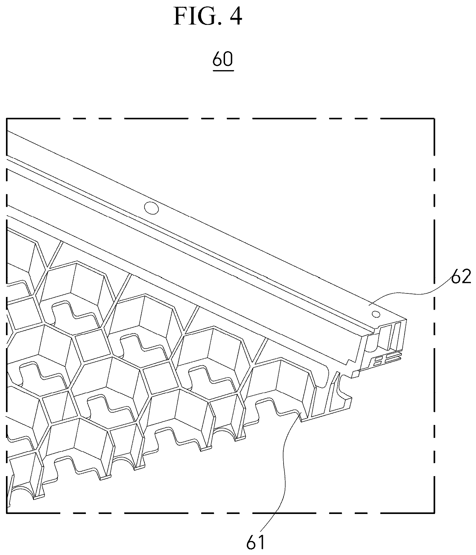

FIG. 4 is an enlarged view of a portion of the conventional battery cell tray shown in FIGS. 2A and 2B.

Referring to FIG. 4, the conventional battery cell tray 60 includes the base tray 61 and height compensation block 62 that are integrally formed and has sides that surround (e.g., extend around a periphery of) the individual battery cells and are all blocked (or covered). Accordingly, the conventional battery cell tray 60 has a structure that does not properly cool the plurality of battery cells because it has little space for wind to escape even though the wind from the cooling fan blows from beneath the plurality of battery cells.

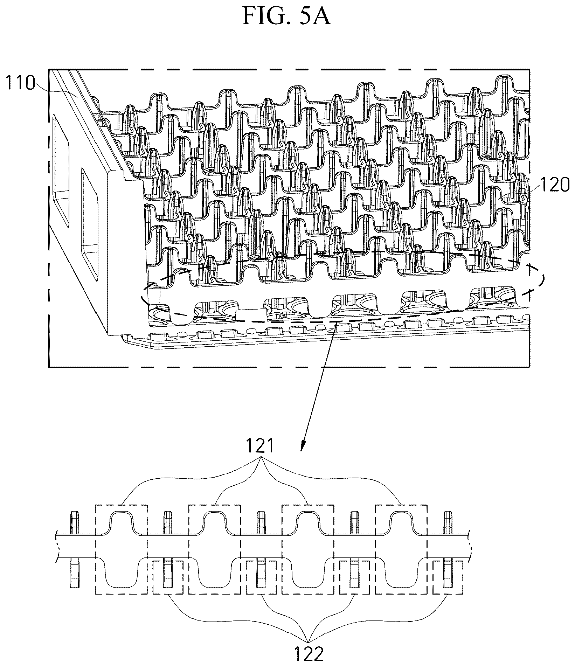

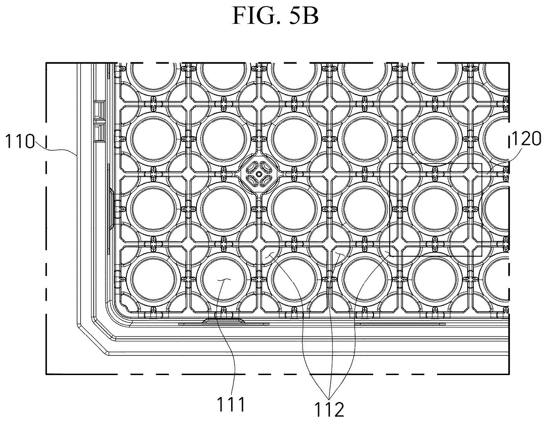

FIG. 5A is a partial perspective view of the base tray and the inner tray coupled together in the battery cell tray according to an embodiment of the present disclosure. FIG. 5B is a partial top view of the base tray and the inner tray coupled together in the battery cell tray according to an embodiment of the present disclosure.

Referring to FIG. 5A, in the battery cell tray 100, according to an embodiment of the present disclosure, the base tray 110 and the inner tray 120 are separate structures. In some embodiments, the inner tray 120 may have a support 121 coupled to the base tray 110 on a side of the base tray 110 for seating (e.g., for accommodating) each individual battery cell therein defined by the partition walls while supporting the battery cell, and a first ventilation groove 122 formed adjacent to the support 121 in the inner tray 120. Because the first ventilation groove 122 is formed on a portion of the side surrounding each individual battery cell, wind may escape through the first ventilation groove 122 when the wind from cooling fan(s) blows from beneath the plurality of battery cells, thereby effectively cooling the plurality of battery cells.

Referring to FIG. 5B, the base tray 110 may have a plurality of holes (e.g., openings) 111/112 formed beneath the plurality of battery cells seated on the base tray 110. In embodiments, the plurality of holes 111/112 may include a seating hole (e.g., a seating opening) 111 for seating (e.g., for supporting or accommodating) each individual battery cell therethrough in the center of the bottom of the space for seating each individual battery cell therein defined by the partition walls, and a first ventilation hole (e.g., a first ventilation opening) 112 configured to define a space for ventilation at the corner of the bottom of the space for seating each individual battery cell therein defined by the partition walls. Because the plurality of holes 111/112 are formed beneath the plurality of battery cells seated on the base tray 110, wind may escape through the first ventilation hole 112 when the wind from the cooling fan(s) blows from beneath the plurality of battery cells, thereby more effectively cooling the plurality of battery cells.

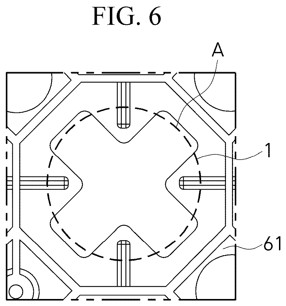

FIG. 6 is an enlarged view of a portion of the base tray of the conventional battery cell tray at where one battery cell is to be seated.

Referring to FIG. 6, it can be seen that, when a battery cell 1 (illustrated in broken line) is seated on the base tray 61 of the conventional battery cell tray 60, a downward penetration region A not covered by the battery cell 1 is very small. The downward penetration region A is about 2% of the space for seating the battery cell 1 thereon, which is insufficient for the wind from the cooling fan to escape from beneath the battery cell 1, making it difficult to smoothly cool the battery cell 1.

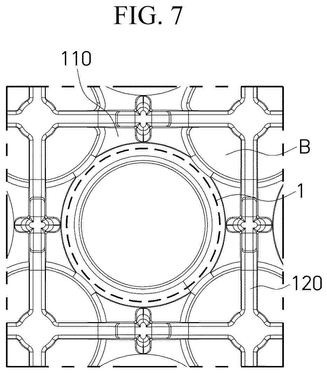

FIG. 7 is an enlarged view of a portion of a base tray of a battery cell tray, according to an embodiment of the present disclosure, at where one battery cell is to be seated.

Referring to FIG. 7, it can be seen that, when the battery cell 1 (illustrated in broken line) is seated on the base tray 110 of the battery cell tray 100, according to an embodiment of the present disclosure, a downward penetration region B is formed much larger by the first ventilation hole 112 than the region A in the conventional battery cell tray 60 shown in FIG. 6. The downward penetration region B is about 34% of the space for seating the battery cell 1 therein, which is much larger than the region A of the conventional battery cell tray 60 shown in FIG. 6. Accordingly, the wind from the cooling fan may be sufficient to escape from beneath the battery cell 1, thereby smoothly cooling the battery cell 1.

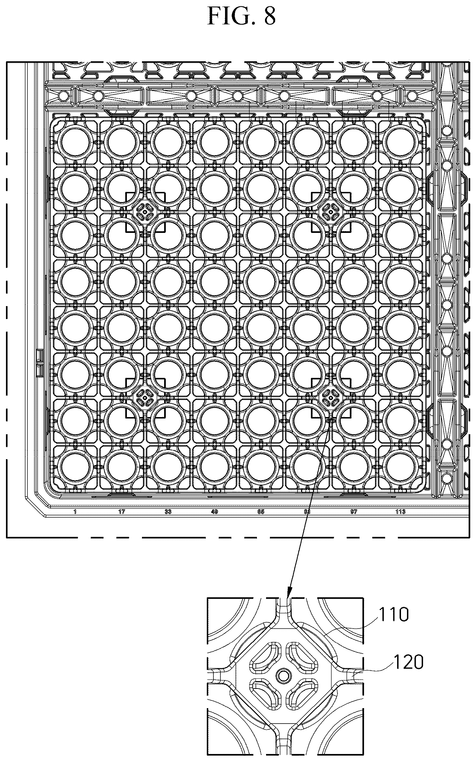

FIG. 8 is a view of a portion where the base tray and the inner tray are bolted in the battery cell tray according to an embodiment of the present disclosure.

Referring to FIG. 8, the battery cell tray 100, according to an embodiment of the present disclosure, may include a number of portions (or areas) at where the base tray 110 and the inner tray 120 are bolted to each other. Referring to FIG. 8, it can be seen that the bolted portions between the base tray 110 and the inner tray 120 also have some ventilation regions to prevent complete blockage of ventilation due to the bolted portions between the base tray 110 and the inner tray 120 because the bolted portions between the base tray 110 and the inner tray 120 are formed in a region at where the plurality of holes 111/112 of the base tray 110 are formed.

The configuration of the bolted portions between the base tray 110 and the inner tray 120 will be described below, in more detail, with reference to the drawings.

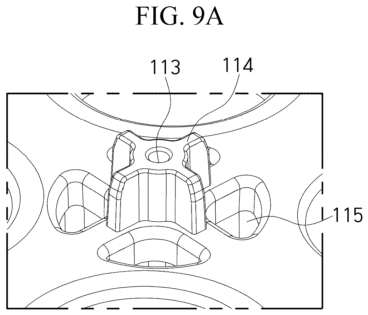

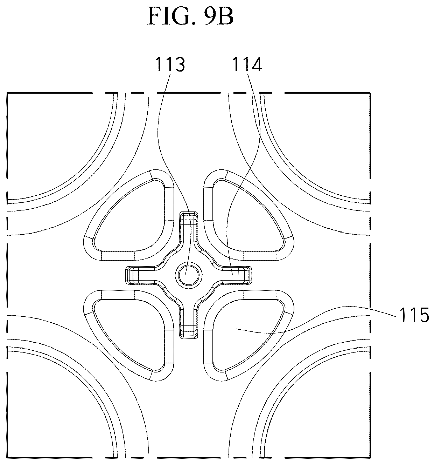

FIG. 9A is a perspective view of a first bolting part of the base tray of the battery cell tray according to an embodiment of the present disclosure. FIG. 9B is a top view of the first bolting part of the base tray of the battery cell tray according to an embodiment of the present disclosure.

Referring to FIGS. 9A and 9B, the base tray 110 may have a first bolting part, which includes a first bolt hole 113 at where the base tray 110 is to be bolted to the inner tray 120 therethrough at a portion beneath the plurality of battery cells seated on the base tray 110. In some embodiments, the first bolting part may have a centering projection 114 formed to center the base tray 110 and the inner tray 120, which allows the base tray 110 and the inner tray 120 to be coupled accurately without misalignment. In some embodiments, the first bolting part may have a plurality of second ventilation holes (e.g., second ventilation openings) 115 formed around the first bolt hole 113, which allows the bolted portions between the base tray 110 and the inner tray 120 to have some ventilation regions without complete blockage of ventilation.

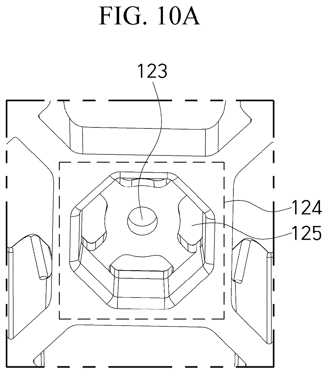

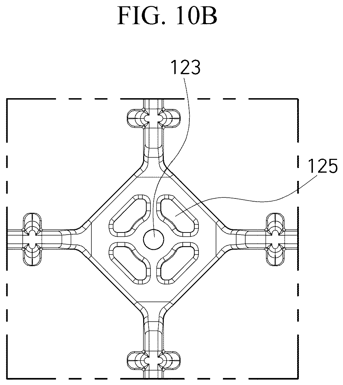

FIG. 10A is a perspective view of a second bolting part of the inner tray of the battery cell tray according to an embodiment of the present disclosure. FIG. 10B is a top view of the second bolting part of the inner tray of the battery cell tray according to an embodiment of the present disclosure.

Referring to FIGS. 10A and 10B, the inner tray 120 may have a second bolting part, which includes a second bolt hole 123 and is to be bolted to the first bolting part of the base tray 110 therethrough. In some embodiments, the second bolting part may have a centering groove 124 coupled to (e.g., corresponding to) the centering projection 114, which allows the base tray 110 and the inner tray 120 to be coupled accurately without misalignment. In some embodiments, the second bolting part may have a plurality of third ventilation holes (e.g., third ventilation openings) 125 formed around the second bolt hole 123, which allows the bolted portions between the base tray 110 and the inner tray 120 to have some ventilation regions without complete blockage of ventilation.

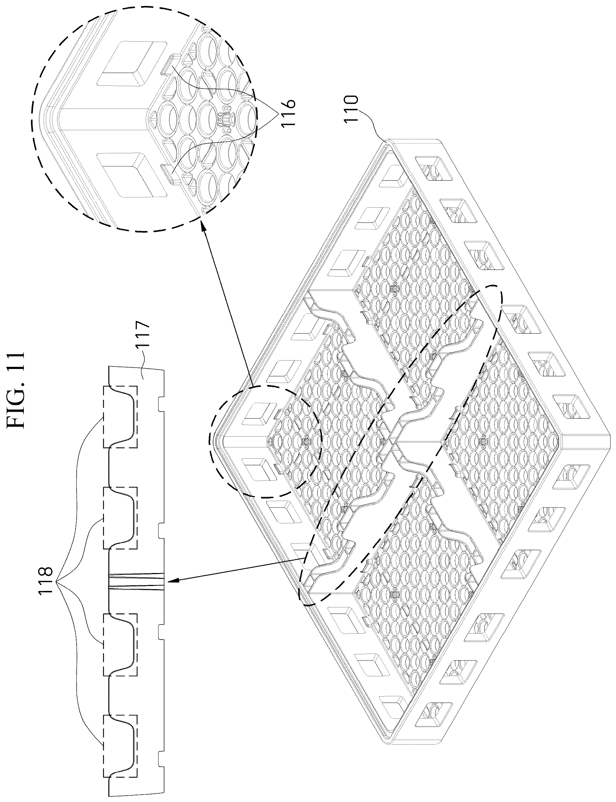

FIG. 11 is a view of a fixture and a reinforcing wall of the base tray of the battery cell tray according to an embodiment of the present disclosure.

Referring to FIG. 11, the base tray 110 may have a fixture 116 formed to fix the inner tray 120 to the contact part of the inner tray 120 on the outside of the base tray 110. The fixture 116 of the base tray 110 may come into contact with the support 121 of the inner tray 120 to fix the inner tray 120 inside the base tray 110.

In some embodiments, the base tray 110 may have a cross-shaped reinforcing wall 117 formed in the center thereof to support the load of the plurality of battery cells. If a large number of battery cells are seated at once without the reinforcing wall 117, a large load is applied to the center of the base tray 110, causing the base tray 110 to sag at the center thereof during the multi-stage loading and movement of the battery cell tray 100, which may result in improper charging and discharging of the battery cells or damage to the base tray 110. Thus, the reinforcing wall 117 supports the load of the plurality of battery cells. In some embodiments, the reinforcing wall 117 may have a second ventilation groove 118 formed at a portion of the upper portion thereof for ventilation. The wind passing through the first ventilation hole 112 of the base tray 110 and the first ventilation groove 122 of the inner tray 120 may escape upwardly from the battery cell tray 100 through the second ventilation groove 118.

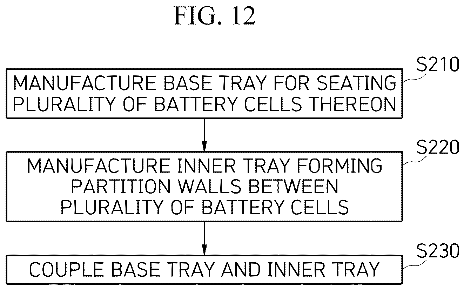

FIG. 12 is a flowchart describing a method of manufacturing battery cell trays according to an embodiment of the present disclosure.

Referring to FIG. 12, the method of manufacturing battery cell trays, according to an embodiment of the present disclosure, may include steps S210 to S230.

Step S210 is a step of manufacturing a base tray for seating a plurality of battery cells thereon. In some embodiments, step S210 may include a step of forming a plurality of holes beneath the plurality of battery cells seated on the base tray (e.g., forming a plurality of holes in the base tray at where or underneath where the plurality of battery cells are to be seated).

Step S220 is a step of manufacturing an inner tray that forms partition walls between the plurality of battery cells. In some embodiments, step S220 may include a step of forming a support coupled to the base tray on the side of the space for seating each individual battery cell therein defined by the partition walls while supporting the battery cell and forming a first ventilation groove adjacent to the support.

Step S230 is a step of coupling the base tray and the inner tray.

The method of manufacturing battery cell trays, according to an embodiment of the present disclosure, has been described above with reference to the flowchart presented in the drawing. For the purposes of simplicity, the method has been illustrated and described as a series of blocks, but the present disclosure is not limited to the order of the blocks. In addition, some blocks may occur in a different order or concurrently with other blocks than illustrated and described herein, and various different branches, flow paths, and sequences of blocks may be implemented that achieve the same or similar results. Furthermore, all of the blocks illustrated may not be required to implement the method described herein.

Meanwhile, in the description with reference to FIG. 12, each step may be further divided into additional steps or combined into fewer steps, depending on the implementation of the present disclosure. Additionally, if necessary, some steps may be omitted or the order between steps may be changed. Moreover, even if there are any other omitted, the contents of FIGS. 3, 5A, 5B, and 7 to 11 may be applied to the contents of FIG. 12. On the other hands, the contents of FIG. 12 may be applied to the contents of FIGS. 3, 5A, 5B, and 7 to 11.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. For example, one type or more selected from among complex oxides of metal, selected from among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be in a range of about 90 wt.% to about 99.5 wt.% with respect to the positive electrode active material layer 100 wt.%. Content of the binder and the conductive material may be in a range of about 0.5 wt.% to about 5 wt.% with respect to the positive electrode active material layer 100 wt.%.

Al may be used as the current collector, but the present disclosure is not limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material in a range of about 90 wt.% to about 99 wt.%, the binder in a range of about 0.5 wt.% to about 5 wt.%, and the conductive material in a range of 0 wt.% to about 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected from among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may act as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer separator having two or more layers of them may be used as the separator.

The separator may include a porous base, and a coating layer including an organic matter, an inorganic matter, or a combination of them may be disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

As is apparent from the above description, according to embodiments of the present disclosure, the effect of the cooling fan at the bottom of the tray may be increased or maximized because the battery cell tray has (or includes or is formed of) a separate base tray and inner tray and a plurality of ventilation grooves are formed on the sides of the partition walls of the inner tray.

According to embodiments of the present disclosure, because the base tray has a plurality of holes formed beneath the plurality of battery cells seated on the base tray, cooling may be effectively performed even though the number of battery cells to be installed is increased.

According to embodiments of the present disclosure, because the base tray has a cross-shaped reinforcing wall formed in the center thereof to support the load of the plurality of battery cells, sagging during a multi-stage loading or transportation of the battery cell tray may be mitigated or prevented.

Although the present disclosure has been described above in connection with example embodiments and drawings, the present disclosure is not limited to these embodiments. A person having ordinary knowledge in the art to which the present disclosure pertains may modify and change the present disclosure within the technical spirit of the present disclosure and the equivalent range of the following claims.

## Claims

1. A battery cell tray comprising:
a base tray configured to accommodate a plurality of battery cells thereon; and
an inner tray coupled to the base tray and having partition walls between areas where adjacent ones of the plurality of battery cells are to be accommodated.

2. The battery cell tray as claimed in claim 1, wherein the inner tray comprises:
a support coupled to the base tray on a side of a space for accommodating each individual battery cell therein defined by the partition walls while supporting the battery cells; and
a first ventilation groove adjacent to the support.

3. The battery cell tray as claimed in claim 1 or claim 2, wherein the base tray has a plurality of holes beneath areas at where the plurality of battery cells are to be seated on the base tray; and, optionally,
wherein the plurality of holes comprises:
a seating hole extending therethrough in a center of a bottom of a space at where each individual battery cell is to be accommodated defined by the partition walls; and
a first ventilation hole defining a space for ventilation at a corner of the bottom of the space at where each individual battery cell is to be seated defined by the partition walls.

4. The battery cell tray as claimed in any preceding claim, wherein:
the base tray has a first bolting part comprising a first bolt hole and is at where the inner tray is bolted to the base tray at a portion beneath the plurality of battery cells seated on the base tray; and
the inner tray has a second bolting part comprising a second bolt hole and is at where the inner tray is bolted to the first bolting part of the base tray.

5. The battery cell tray as claimed in claim 4, wherein:
the first bolting part has a centering projection to center the base tray and the inner tray; and
the second bolting part has a centering groove coupled to the centering projection.

6. The battery cell tray as claimed in claim 4 or claim 5, wherein:
the first bolting part has a plurality of second ventilation holes around the first bolt hole; and
the second bolting part has a plurality of third ventilation holes around the second bolt hole.

7. The battery cell tray as claimed in any preceding claim, wherein the base tray has a fixture formed to fix the inner tray to a contact part with the inner tray on the outside of the base tray.

8. The battery cell tray as claimed in any preceding claim, wherein the base tray has a cross-shaped reinforcing wall in its center to support the load of the plurality of battery cells; and, optionally, wherein the reinforcing wall has a second ventilation groove in a portion of its upper portion for ventilation.

9. A method of manufacturing battery cell trays, the method comprising:
manufacturing a base tray configured to accommodate a plurality of battery cells thereon;
manufacturing an inner tray configured to form partition walls between areas at where the plurality of battery cells are to be accommodated; and
coupling the base tray and the inner tray together.

10. The method as claimed in claim 9, wherein the manufacturing of the inner tray comprises:
forming a support coupled to the base tray on a side of a space for accommodating each individual battery cell therein defined by the partition walls while supporting the battery cells; and
forming a first ventilation groove adjacent to the support.

11. The method as claimed in claim 9 or claim 10, wherein the manufacturing of the base tray comprises forming a plurality of holes beneath areas at where the plurality of battery cells are to be seated on the base tray; and, optionally, wherein, in the forming of the plurality of holes, the plurality of holes comprise:
a seating hole in a center of a bottom of a space at where each individual battery cell is seated therein defined by the partition walls; and
a first ventilation hole configured to define a space for ventilation at a corner of the bottom of the space for seating each individual battery cell therein defined by the partition walls.

12. The method as claimed in any of claims 9 to 11, wherein:
the manufacturing of the base tray comprises forming a first bolting part comprising a first bolt hole at where the inner tray is bolted to the base tray at a portion beneath areas at where plurality of battery cells are to be seated on the base tray; and
the manufacturing of the inner tray comprises forming a second bolting part comprising a second bolt hole to be bolted to the first bolting part of the base tray.

13. The method as claimed in claim 12,
(A) wherein:
the forming of the first bolting part comprises forming a centering projection to center the base tray and the inner tray; and
the forming of the second bolting part comprises forming a centering groove coupled to the centering projection;
and/or
(B) wherein:
the forming of the first bolting part comprises forming a plurality of second ventilation holes around the first bolt hole; and
the forming of the second bolting part comprises forming a plurality of third ventilation holes around the second bolt hole.

14. The method as claimed in any of claims 9 to 13, wherein the manufacturing of the base tray comprises forming a fixture to fix the inner tray to a contact part with the inner tray on the outside of the base tray.

15. The method as claimed in any of claims 9 to 14, wherein the manufacturing of the base tray comprises forming a cross-shaped reinforcing wall in a center of the base tray to support the load of the plurality of battery cells; and, optionally, wherein the forming of the cross-shaped reinforcing wall comprises forming a second ventilation groove on a portion of an upper portion of the reinforcing wall for ventilation.
